# EUROPEAN PATENT APPLICATION

(11) **EP 0 814 203 A2**
(43) Date of publication of application: **29.12.1997**
(21) Application number: 97114693.1
(22) Date of filing: 11.11.1994
(51) Int. Cl.: E02B 11/00, F16L 11/18

(54) **Drainage system**

(30) Priority: 11.11.1993 GB 9323289
(62) Divisional of application: 95900242.9
(71) Applicant: HEPWORTH BUILDING PRODUCTS LIMITED, Sheffield S30 5HG (GB)
(72) Inventor: Brook, Alan, Belthorn, Blackburn BB1 2PN (GB)
(74) Representative: Mounteney, Simon James

(57) **Abstract**

A clay pipe (600) with a plastics socket (602) fitted to an end thereof, the plastics socket being provided with an internal formation (608) which permanently deforms when the socket (602) is placed over the end of a pipe, to securely retain the socket in position upon an end region of the pipe.

## Description

The present invention relates to a drainage system and particularly, but not exclusively, to a drainage system comprising components suitable for use with clay drainage pipes and components.

It is a well-known problem that efficiency and reliability of drainage system components can be seriously compromised by the manner in which the system is installed. If a component is difficult to install, it will require a certain degree of skill to install the component correctly. As a consequence, a constructor will need to employ skilled labour or risk having components installed in a less than perfect manner. Furthermore, it is not uncommon for labourers, skilled or otherwise, to install a component incorrectly simply through laziness or ignorance.

The various aspects of the present invention set out to provide components which can be easily installed with little or no risk of error, whilst simplifying the installation procedures in order to provide less incentive and/or opportunity for compromising installation. Furthermore, the invention sets out to provide components which are not only easy to install, but which are generally labour-saving and which are readily adaptable to different circumstances in which they might be employed, thereby reducing the need of a constructor to buy and keep a wide range of alternative components.

According to the invention there is provided a clay pipe as set out in Claim 1. Preferred features of the invention are set out in Claim 2.

Embodiments of the invention will now be described, by way of example, with reference to the accompanying drawings in which:-
Figure 1 is a perspective view of an access gully in accordance with the invention;
Figure 2 is a cross-section through the access gully of figure 1 with a riser and a waste adapter installed;
Figure 3 is a vertical cross section through an alternative form of access gully;
Figure 4 is a plan view of the gully shown in figure 3;
Figure 5 is a side view of an adjustable bend in accordance with the invention;
Figure 6 is a cross-section through the adjustable bend of figure 5;
Figure 7 is a schematic view of a conventional adjustable bend;
Figure 8 is a cross-sectional view of the access gully of figure 2 with an adjustable bend similar to the one shown in figures 5 and 6 fitted at its outlet;
Figure 9 is a pipe adapter in accordance with the invention;
Figure 10 is a perspective view of an oblique junction fitted with sockets in accordance with the invention;
Figure 11 is a cross-sectional view through one of the sockets shown in figure 10; and
Figures 12 and 13 are radial cross sections through a socket which is a modification of that shown in figure 11.

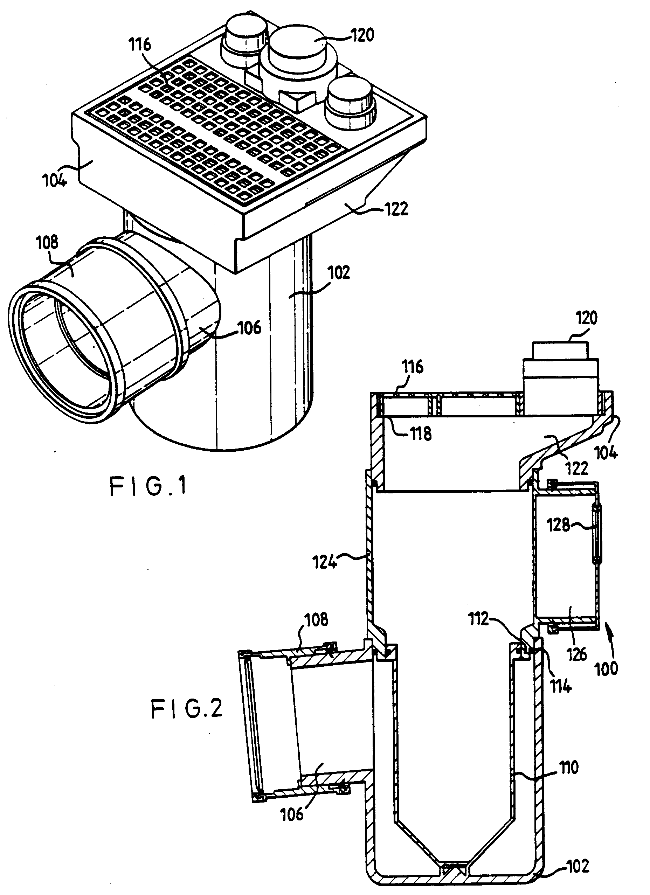

The access gully 100 which is shown in figures 1 and 2 comprises a plastics lower housing 102 and clay ware upper housing 104. The lower housing 102 may be formed using an injection moulding process and the upper housing 104 may be formed using a slip casting process. Alternatively both housings may be of plastics or of slip-casting clay.

The lower housing 102 is generally cylindrical and is closed at the bottom and open at the top, as is normal. An outlet pipe 106 feeds from the side of the lower housing 102. A factory-fitted coupling 108 is provided on the outlet pipe 106. A dip-tube trap 110 is provided coaxially within the lower housing 102. The dip-tube trap can be lifted upwards to remove it from the lower housing 102. The upper housing 104 is rectangular in plan and fitted to the upper, open end of the lower housing 102. The junction between the two housings is formed by a depending cylindrical portion 112 of the upper housing 104 which fits concentrically within the open upper end of the lower housing 102. An annular seal 114 is provided between the rally outer surface of the depending portion 112 of the upper housing 104 and the radially inner surface of the lower housing 102.

Because both the lower housing 102 and the depending portion 112 of the upper housing 104 are circular in cross-section, the depending portion 112 may be freely rotated within its seat in the lower portion 102. This enables the upper housing 104 to be rotated in the horizontal plane with respect to the lower housing 102.

The upper housing 104 is open at the top and comprises a grid 116 situated in a seat 118 which extends completely around the perimeter of the open top of the upper housing 104. The grid 116 fits into the seat 118 directly above the dip-tube trap 110. A waste/rainwater connection 120 fits into the top of a region 122 of the upper housing 104 which is offset from above the lower housing 102. The waste/rainwater connection 120 is also supported by the seat 118.

Because the top housing portion 104 is offset, this allows the upper housing portion 104 to be butted to the side of the building whilst the grid 116 is located above the dip-tube trap 110. This ensures that the dip-tube trap 110 will be easily removable once the grid 116 has been removed. As a result cleaning and rodding are greatly facilitated.

Figure 2 shows a variation in which, a riser 124 is installed between the lower housing 102 and the upper housing 104. The riser allows side access by an additional inlet 126. The side inlet 16 is fitted with an integrated side inlet spout 128. The side inlet spout 128 is formed in a cover 130 which is rotatably fitted over the inlet 126. Due to the rotatable nature of the cover 130, the position of the inlet spout 128 in the circumferential direction of the inlet 126 can be adjusted by rotating the cover 130. This has the effect of moving the vertical position of the inlet spout 128.

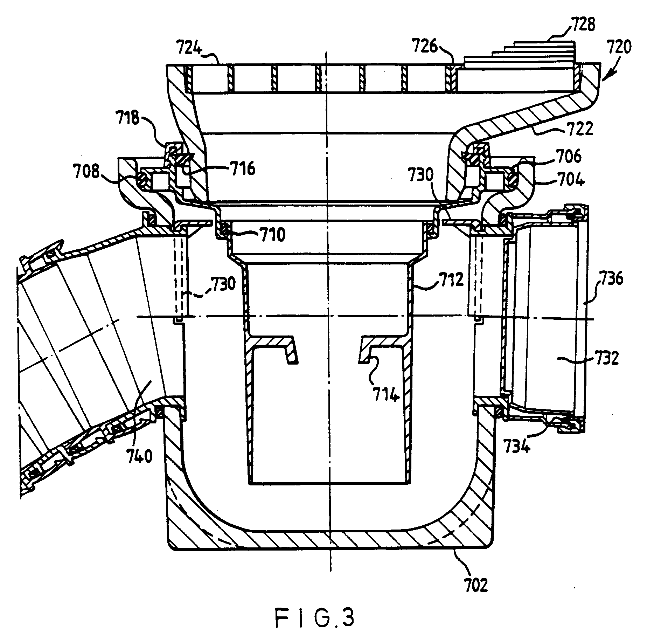

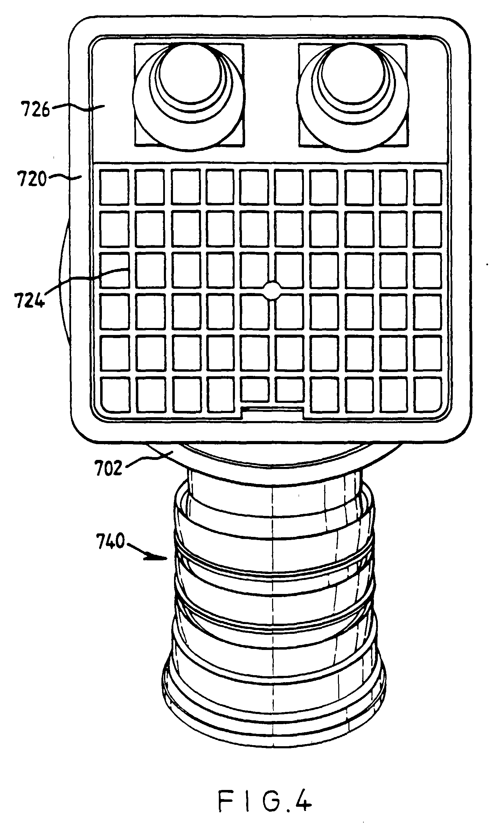

Figures 3 and 4 show another form of the access gully. This comprises a clayware (or plastics) pot 702 with an upper bell end 704 in which is seated a trap carrier 706 made of plastics for example polypropylene. The trap carrier has an external sealing ring 708 seated in the bell end, and a lower internal sealing ring 710 in its open lower end.

A polypropylene or other plastics trap 712 is seated and sealed in the open lower end of the trap carrier and projects downwardly into the gully pot 702. The trap comprises a substantially cylindrical sleeve, with internal handles flange 714 on the interior of its cylindrical wall substantially mid way along its height for use in removing and replacing the trap.

The upper side of the trap carrier is also open, and of larger diameter than the opening which receives the trap. It is provided with an internal sealing ring 716 secured for example by a snap-fastening cap ring 718. An access gully top 720 of slip-cast clayware or of plastics is seated in the trap carrier and sealed by the ring 716. As in the case of figures 1 and 2, this gully top is asymmetrical relative to the vertical centre line of the pot and trap, with an offset region 722.

A plastics or metal grid 714 is seated in the gully top directly above the trap. A plastics or metal waste/rainwater connection 726 is also seated in the gully top, alongside the grid 724.

The effects and advantages of the described arrangement are substantially as set forth with reference to figure 1 and 2.

The inlet component 726 provides two different pipe access positions. At each of these is a closure 728 consisting of stepped regions of progressively decreasing diameter. One or more of these regions can be cut or broken away by the user, to provide a circular opening to accommodate waste pipes of various different standard sizes, or a circular or square opening to accommodate rainwater pipes.

The grid and pipe access components are separate, so that the grid can be removed to give access to the trap and to enable the trap to be removed, without disturbing the pipe access component 726 and the pipe or pipes connected to it.

On one side of the gully pot, a back inlet socket 732 is provided, which has an internal seal ring 734 for receiving and sealing a pipe. When no connection is to be made to the back inlet socket it is closed by a stopper 736. The back inlet socket is seated and sealed in an opening provided in the wall of the pot, and retained by a locking plate 730.

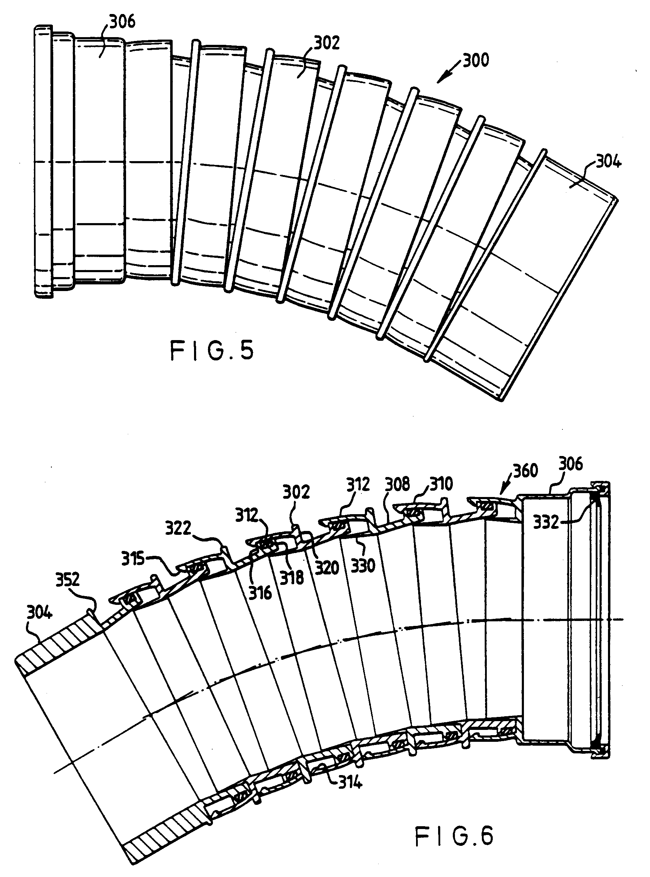

Figure 3 also shows another opening in the pot wall, in which is seated and sealed an adjustable bend 740 of plastics material for connection to a discharge pipe. This adjustable bend will be further described below with reference to figures 5 and 6. It is retained by a locking plate 730.

Figures 5 and 6 show an adjustable bend in accordance with a second aspect of the invention.

The adjustable bend 300 shown in figures 5 and 6 is formed from a series of slidably interengaged 302, 304 and 306 of circular cross section. The rings can be divided into three types: body segments 302, male end segment 304 and female end segment 306.

The body segments 302 form the majority of the length of the bend 300. Each comprises a radially narrower portion 308, and an axially adjacent, coaxial, radially wider portion 310. The radially narrower portion 308 of one segment is inserted into the radially wider portion 310 of a subsequent segment 302. An annular seal 312 is provided on a radially outer surface of each radially narrower portion 308 and forms a seal between the radially outer surface of the radially narrower portion 308 of one segment and the radially inner surface of a radially wider portion 310 of the subsequent segment 302. Each segment has an inner annular flange 330 spaced radially within the portion 310. The end of the portion 308 of a segment, with its seal 312, is received between the flange 330 and the outer portion 310 of the adjacent segment.

Each radially narrower portion 308 is slidably received within the radially greater portion 310 of an adjacent body segment 302. This allows two connected body segments 302 to move relative to one another in the axial direction, the circumferential direction and - by flexing of the seals 312 in combination with axial sliding - in the radial direction. In the embodiment shown, consecutive segments can provide a relative axial inclination of 5°. The overall axial inclination which can be obtained (i.e. the maximum bend angle) is approximately 30°.

Movement in the axial direction is limited by a radially inwardly directed annular lip 314 provided at the axially outer perimeter of the radially greater portion 310 of each body segment 302 and a radially outwardly directed first flange 316 provided on each radially narrow portion of each body segment 302. The abutment of opposing lips 314 and flanges 316 restricts axial separation of consecutive body segments 302 because in a connected pair of body segments 302, the flange 316 of one will be situated axially inwards of the lip 314 of the segment 302 into which it is inserted.

Each radially inner portion also comprises a radially outwardly directed second flange 318 which abuts against a step 320 provided at an axially inner end of the radially greater portion of a subsequent body segment 302, into which the segment 302 is inserted. This limits axial insertion of one body segment 302 into another.

Each radially greater portion of each body segment 302 further comprises a radially outwardly directed flange 322 which abuts against the axially outer end of a radially greater portion 310 of a subsequent body segment 302 inserted into the body segment 302. This restricts axial insertion of the body segment carrying the radially outwardly directed flange 322 into the other. Flange 322 may extend outwards beyond portion 310 to form a reinforcing rib.

The axially outer end of each radially greater portion 310 is inclined radially inwardly to present a sloping surface 315 to assist in feeding the radially smaller portion 308 of a body segment 302 to be inserted into the body segment 302 inwardly. Insertion may also be assisted by an inclined surface provided on the second flange 318 of each radially smaller portion 308 which otherwise presents the first obstacle to the insertion of one body segment 302 into another.

Each seal 312 is situated between the two radially outwardly directed flanges 318 and 316 provided on a respective radially narrower portion.

The male end segment 304 comprises a body portion having the same radially outer diameter as the basic radially outer diameter of the radially greater portions of the body segments 302. Its inner configuration at its inner end is identical to that of the inner configuration of each of the radially smaller portions 308 of the body segments 302.

The male end portion 304 differs from the body segments 302 in that it comprises a cylindrical outer surface which is free of interruption and therefore suitable for insertion into a socket. The male end segment 304 comprises an outwardly directed flange 352 which limits its axial movement against the body segment 302 onto which it is fitted.

The female end segment 306 comprises a radially larger region 360 which has an outer configuration identical to that of the larger portions 310 of the body segments 302. This connector differs from each of the body segments 302 in that, rather than a radially smaller portion 308, it comprises a socket of a type suitable for connection with a spigot or a pipe end, provided with an internal seal ring 332.

Each of the end segments may be integrally formed with some other component.

Alternatively, a component may be provided with a cylindrical portion having an inner configuration identical to that of a radially greater portion of one of the body segments 302. This would enable it to receive a radially narrower portion 308 of a body segment therein. Alternatively or additionally, the component may be provided with a cylindrical portion which has a radially outer configuration similar to that of the radially narrower portion 308 of each of the body segments 302. This would enable a body portion 302 to be fitted over this portion of the component.

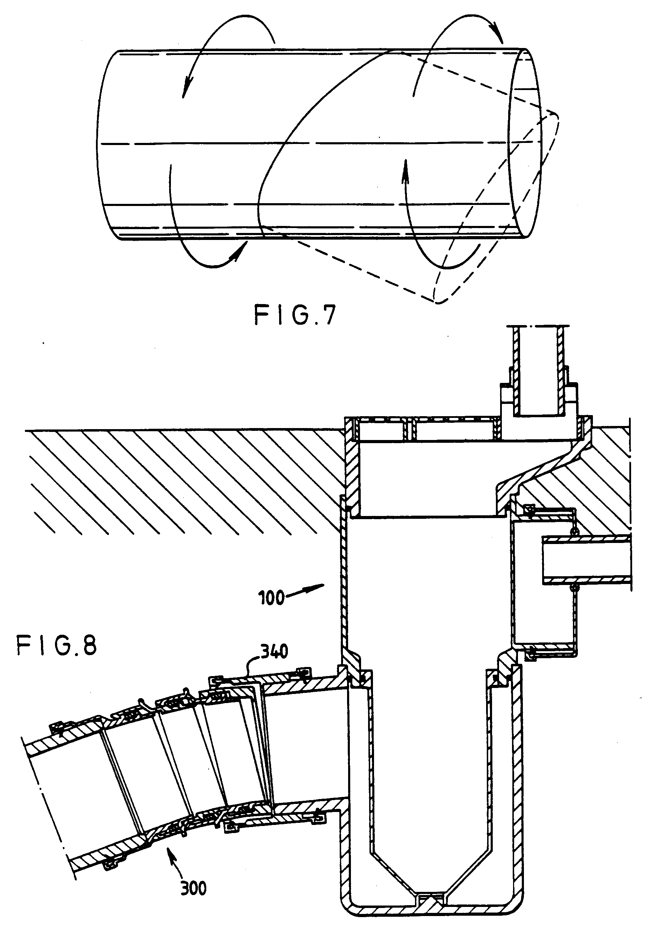

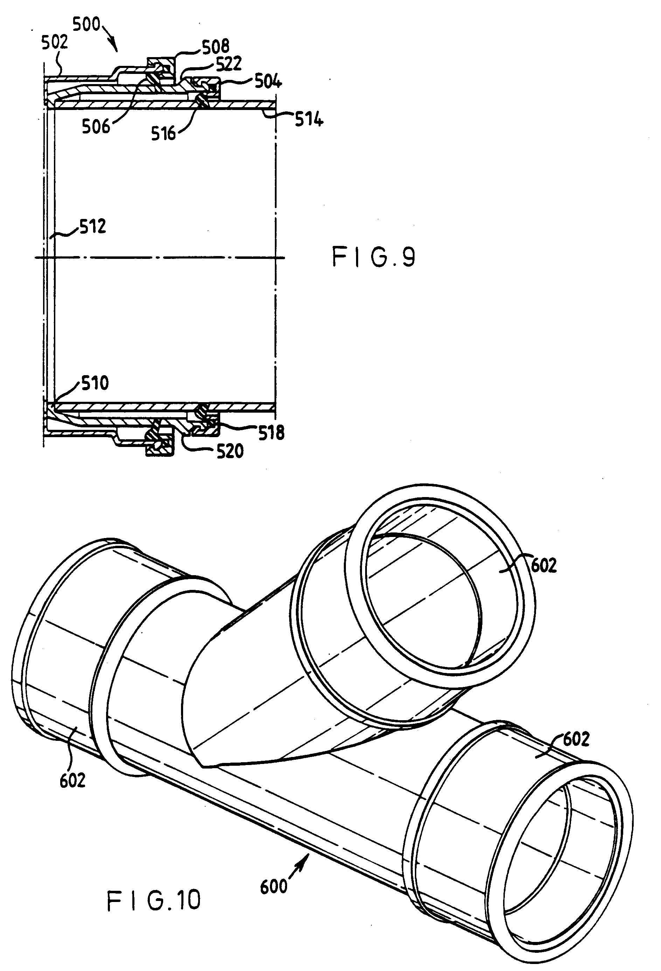

Figure 8 shows an access gully similar to the one shown in figure 2. The access gully shown in this figure has the male end portion of an adjustable bend fitted to the outlet by a pipe coupling 340. This can be done in the factory, e.g. as described below with reference to Figures 10 to 13 and the engagement can be made effectively permanent. With the bend fixed in position in this manner, the gully is very versatile and is less susceptible to poor installation quality, because there is no reason for the labourer to interfere with the connection between the gully and bend.

Figure 9 shows an assembly comprising an adapter ring in accordance with the third aspect of the invention.

The adapter ring 504 allows pipes or components having different external diameters to be connected together.

Figure 9 shows a coupling ring 502 which is essentially a socket which may be pushed onto the end of a pipe, may be factory-fitted or may be welded or integrally formed in some other way with a pipe or with a pipe fitting or other component. If the coupling ring 502 is to be fitted to a clay pipe, it has been found that shrinking the coupling ring 502 tightly onto the clay pipe in the factory provides a particularly useful socket.

The coupling ring 502 includes a radially inwardly directed annular seal 506. The seal is held in position just inside the mouth of the coupling ring 502 by an annular clip 508 which fits over the mouth of the coupling ring 502 and traps a portion of the annular seal 506 against radially inner side of the coupling ring 502 to hold it in position.

The adapter ring 504 has a smaller diameter than the coupling ring 502. The outer diameter of the adapter ring 504 fits inside the coupling ring 502 with a small radial clearance all round. The clearance is sealed by the annular seal 506. The axial end of the adapter ring 504 which for insertion into the coupling ring 502 is tapered radially inwardly. This facilitates insertion of the adapter ring 504 into the coupling ring 502.

The adapter ring 504 also comprises an annular, inwardly directed flange 510. This flange 510 extends radially inwardly to define an aperture 512. The diameter of the aperture corresponds exactly with the internal diameter of the pipe 514 which is inserted into the adapter ring 504. The adapter ring 504 also comprises a radially inwardly directed annular seal 516 which is similar to the seal 506 provided in the coupling ring 502. The annular seal 516 provided in the adapter ring is also held in place by a clip 518 which is similar to the clip 508 which holds the seal 506 in place.

Axially inwardly of the seal 516 and clip 518, the adapter ring 504 also comprises an outer annular rib 520 directly adjacent the position at which the clip 518 is fitted. This rib 520 has a sloping surface 522 extending radially inwardly from the clip position.

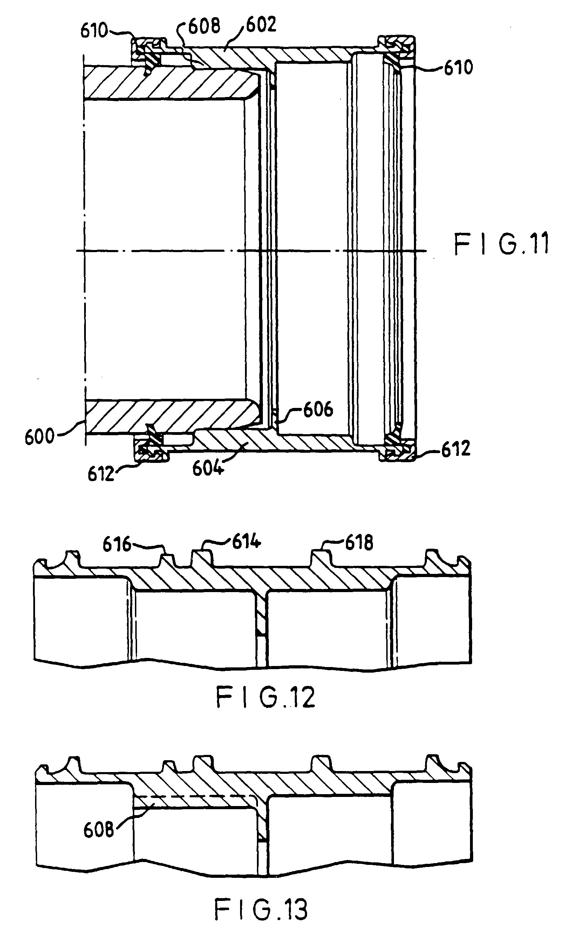

Figures 10 and 11 illustrate a fourth aspect of the invention. They show an oblique junction 600 which is made from fired clay fitted with a plastics coupling assembly at the end of each pipe length.

Each coupling is factory-fitted and comprises a central cylindrical portion 604 comprising a radially inwardly directed flange 606 which locates against the end of the pipe to assist in locating the coupling on the pipe end correctly. The cylindrical section comprises a series of radially inwardly directed sacrificial ribs 608 which deform when the ring is inserted onto the pipe end to provide a firm and permanent engagement between the coupling and the pipe end. During manufacture, each coupling is hammered or forced on to the fitting and is therefore held in position very strongly.

The couplings shown in figure 11 each comprise a radially inwardly directed annular seal 610 at each mouth of the central cylindrical portion 604. Each annular seal 610 is held in position by an annular end cap 612 which is snapped over the respective mouth of the coupling.

The plastics coupling assembly can then be connected with a spigot end of a pipe or other component.

Figures 12 and 13 illustrate couplings for factory fitting, generally similar to that of figure 11 but modified by the addition of annular external ribs 614, 616, 618 to provide additional strength. A sacrificial rib 608 is visible in figure 13. Any desired number of these ribs can be provided, spaced around the circumference of the coupling. Typically six or eight such ribs are provided. Figure 12 shows the cross section of the coupling at a position between two of the ribs, where the internal diameter is not less than the external diameter of a pipe; the internal diameter is desirably somewhat greater than the pipe diameter, to provide space to accommodate material displaced from the sacrificial ribs.

## Claims

1. A clay pipe with a plastics socket fitted to an end thereof, the plastics socket being provided with an internal formation which permanently deforms when the socket is placed over the end of a pipe, to securely retain the socket in position upon an end region of the pipe.

2. The combination claimed in claim 1 in which the formation is a sacrificial rib.
